# EUROPEAN PATENT SPECIFICATION

(11) **EP 1 914 150 B1**
(45) Date of publication and mention of the grant of the patent: **16.12.2009**
(21) Application number: 07118179.6
(22) Date of filing: 10.10.2007
(51) Int. Cl.: B62D 5/09, B62D 5/06

(54) **Steering system**
Lenksystem
Système de direction

(30) Priority: 17.10.2006 US 581971
(43) Date of publication of application: 23.04.2008
(73) Proprietor: Deere & Company, Moline, IL 61265-8098 (US)
(72) Inventor: Schick, Troy E, Cedar Falls, 50613 (US); Wallestad, Steven D, Cedar Falls, IA 50613 (US); Herbst, Brian L, Cedar Falls, IA 50613 (US); Becker, Manfred, 67259, Beindersheim (DE); Mueller Dr., Benedikt, 67368, Westheim (DE)
(74) Representative: Holst, Sönke

(56) References cited:
- DE-A1- 10 046 858
- DE-A1- 19 703 846
- DE-A1- 19 855 405

## Description

The present invention relates to a steering system, in particular a steer-by-wire steering system, the system comprising a hydraulic circuit including a hydraulic pump, a reservoir, a bi-directional steering actuator having left and right inlets, first and second electronic control units (ECU) for generating electrical steering control signals in response to an operator-generated steering command, the hydraulic system comprising: a first solenoid operated directional control valve unit; a first solenoid operated shut-off valve, the first directional control valve unit and the first shut-off valve being connected in series between the pump, the reservoir and the steering actuator, and the first directional control valve unit and the first shut-off valve being connected to the first ECU and controlled thereby; a second solenoid operated directional control valve unit; and a second solenoid operated shut-off valve, the second directional control valve unit and the second shut-off valve being connected in series between the pump, the reservoir and the steering actuator, and the second directional control valve unit and the second shut-off valve being connected to the second ECU and controlled thereby.

Steer-by-wire systems in vehicles eliminate the mechanical link between the steering wheel and the road wheels, and permit the system to achieve a desirable steering "feel" or other control characteristic. Steer-by-wire systems have been difficult to implement in vehicles because of cost, reliability and precision requirements. In an electro-hydraulic steer-by-wire system, redundant steering valves must be used to insure steering function in the event of a failure of a single valve. Such a system would be too costly if each steering valve is sized sufficient to handle the total steering flow requirements by itself.

Steer-by-wire systems are known in the prior art as disclosed for example in DE 100 46 858 A1 or DE 197 03 846 A1 wherein they show one or more disadvantages as described above.

To insure steering function in the event of a failure some improved steering-by-wire systems comprise valve arrangements which are providing a certain safety state of steering function. DE 198 55 405 A1 forms the preamble of indepent claim 1 and discloses a steering-by- wire system with two steering valve arrangements which are controlled in parallel for steering a bi-directional steering cylinder. Each valve arrangement is connected in series to a control valve, which, in case a fault situation in the hydraulic circuits occurs, will be deactivated to open a free flow for the steering valve. One disadvantage of this proposed steering-by-wire system is, that even under unsafe conditions or in the event of a failure the steering valve will be under hydraulic flow.

Accordingly, an object of this invention is to provide an improved steering system for a steer-by-wire steering system. A further object of the invention is to provide such a system which has redundant valves and which is cost effective.

These and other objects are achieved by the teaching of claim 1, wherein a hydraulic system or circuit is provided for a steer-by-wire steering system having a pump, a reservoir, a bi-directional steering actuator having left and right inlets, and first and second electronic control units (ECU) for generating electrical steering control signals in response to an operator-generated steering command. The circuit includes first and second solenoid operated directional control valve units, and first and second solenoid operated shut-off valves.

Each directional control valve unit is connected in series with one of the shut-off valves between the pump, the reservoir and the steering actuator. The first directional control valve unit and the first shut-off valve are connected to and controlled by the first ECU. The second directional control valve unit and the second shut-off valve are connected to and controlled by the second ECU. In the absence of a fault condition both shut-off valves are open so that hydraulic flow to and from the actuator is shared by both the first and second directional control valve units.

In response to fault condition in the first directional control valve or in a portion of the system associated with the first directional control valve unit, the first ECU closes the first shut-off valve so that the actuator is controlled only by the second directional control valve unit.

The circuit further includes a shuttle check valve communicated with the directional control valve units and the actuator for communicating to the pump a pressure signal representing a highest pressure sensed therein. The circuit also includes a pressure limiting relief valve unit communicated with the actuator inlets. The circuit also includes valve spool position sensors, each operatively coupled to a respective one of the directional control valve units, and each communicating a valve position signal to one of the ECUs.

Preferably, each directional control valve unit includes a pair of solenoid operated 3-way, 2-position valves, each controlling communication of pump pressure to one of the actuator inlets. Each of the 3-way, 2-position valves is spring biased to a position wherein communication is blocked between the pump and the actuator and communication is open between the reservoir and the actuator. Each of the shut-off valves is spring biased to a position wherein communication to the pump is blocked and communication to the reservoir is open.

In normal conditions, the solenoids of the shut-off valves are both energized so that both directional control valve unit share in the control of hydraulic flow to and from the actuator 12. However, if a fault occurs the shut-off valve in the failing portion of the circuit is de-energized and allowed to close, so that the actuator can be controlled solely by the directional control valve unit in the non-failing portion of the circuit.

Thus, with this invention redundant valves guarantee steering function in the event of a single valve failure. However, instead of each valve being capable of handling the total steering flow requirement, the flow capacity of each valve is combined to achieve the total steering flow requirement. In this manner, smaller, lower cost (direct acting) valves can be used to achieve the redundancy required in a steer-by-wire system.
Fig. 1 is a schematic diagram of a hydraulic circuit portion of a steer-by-wire steering system according to the present invention; and
Fig. 2 is a schematic diagram of an electronic system or circuit portion of a steer-by-wire steering system.

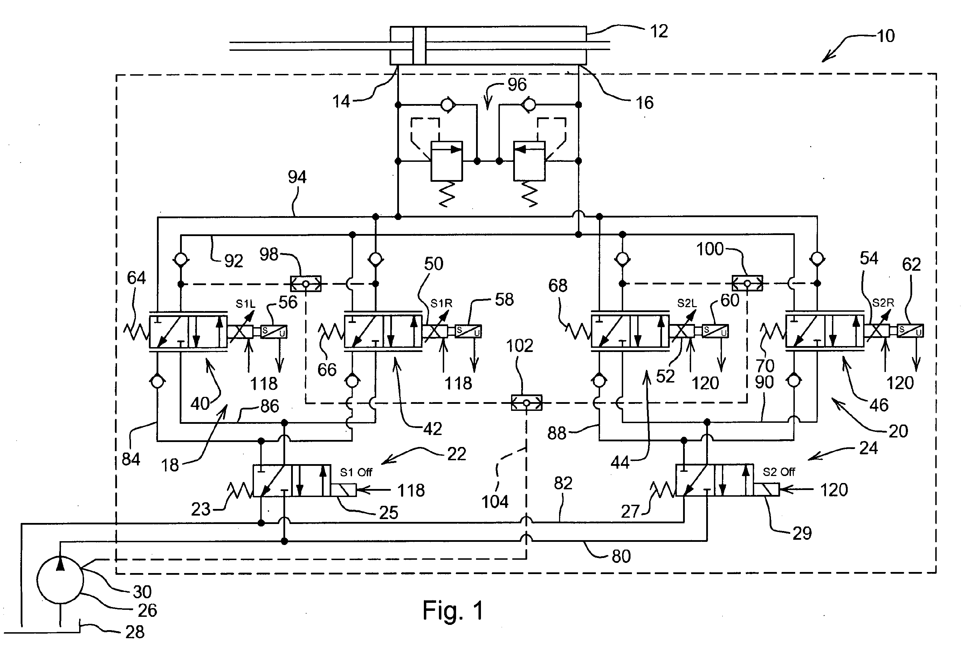

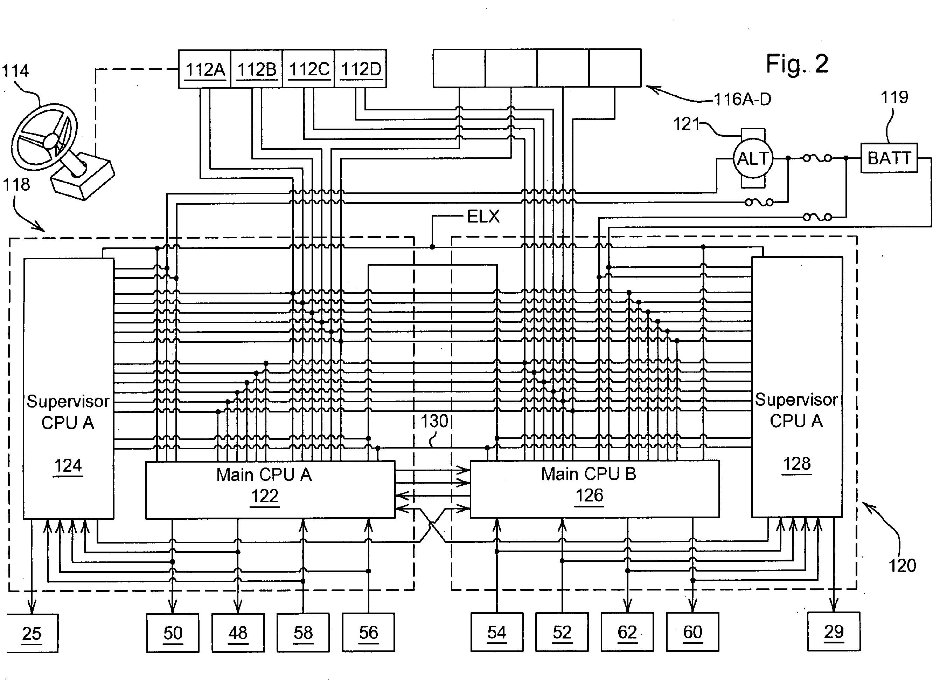

Referring to the Fig. 1, a steer-by-wire hydraulic system or circuit 10 includes a bi-directional hydraulic steering cylinder or actuator 12 connected to steerable wheels (not shown) and with left and right inlet ports 14 and 16. Hydraulic circuit 10 also includes first and second solenoid operated directional control valve units 18 and 20, first and second shut-off valves 22 and 24, a pump 26 and a reservoir 28. Pump 26 includes a load sense port 30. Valve units 18 and 20 and shut-off valves 22 and 24 are connected and controlled by first and second electronic control units shown in Fig. 2.

Valve 22 includes a spring 23 and a solenoid 25, and valve 24 includes a spring 27 and a solenoid 29.

Valve unit 18 includes first and second solenoid operated 4-way, 2-position proportional valves 40 and 42. Valve unit 20 includes first and second solenoid operated 4-way, 2-position proportional valves 44 and 46. Each valve 40-46 includes a solenoid 48-54, a valve position sensor 56-62, and a spring 64-70. The valves are preferably small low-cost cartridge type valves. The valve position sensors 56-62 may be commercially available LVDT (linear variable differential transformer) type spool position sensors, or an suitable similar position sensor.

Lines 80 and 82 connect the pump 26 and reservoir 28, respectively, to inlet ports of shut-off valves 22 and 24. Line 84 connects a first outlet of shut-off valve 22 to inlets of valves 40 and 42. Line 86 connects a second outlet of shut-off valve 22 to inlets of valves 40 and 42. Line 88 connects a first outlet of shut-off valve 24 to inlets of valves 44 and 46. Line 90 connects a second outlet of shut-off valve 24 to inlets of valves 44 and 46. Check valves in lines 84 and 88 permit one-way fluid flow therethrough to shut-off vales 22 and 24. Alternatively, valves 40 and 42 could be replaced by a single 3-position, 4-way valve (not shown), and, similarly, valves 44 and 46 could be replaced by a single 3-position, 4-way valve (not shown).

Line 92 connects right actuator inlet 16 to an outlet of each of valves 40-46. Line 94 connects left actuator inlet 14 to an outlet of each of valves 40-46. Check valves in line 92 permit one-way fluid flow therethrough from valves 40 and 44 to actuator right inlet 16. Check valves in line 94 permit one-way fluid flow therethrough from valves 42 and 46 to actuator left inlet 14.

A relief and check valve circuit 96 operates in a known manner to limit pressure in the actuator 12 and in lines 92 and 94, such as when a steerable wheel (not shown) strikes an object, such a stump. Shuttle check valves 98, 100 and 102 communicate the highest pressure in the branches of lines 92 and 94 to the line sense port 30 of pump 26 via load sense line 104.

In an alternate embodiment (not shown) each of valve units 18 and 20 may include only a single 4-way, 3-position, spring-centered, dual solenoid operated valve. Also, alternatively, all of valves 22, 24 and 40-46 could be either direct acting or pilot operated.

Turning now to Fig. 2, an electrical system or circuit 110 includes a plurality (preferably 4) of redundant steering wheel sensors 112A-D operatively connected to a steering wheel 114. Front redundant wheel angle sensors 116A-D are operatively connected to steerable front wheels (not shown). Sensors 112 are preferably commercially available incremental encoders, while sensors 116 may be analog Hall effect or potentiometer type rotary angle sensors.

Each electronic control unit (ECU) comprises a main processing unit (122, 126) and a supervisory control unit (124, 128)

Pairs of each of sensors 112 and 116 are connected, respectively, to a first channel 118 and a second channel 120. First channel 118 includes the first main processing unit 122 and the first supervisory control unit 124. The first main processing unit 122 and first supervisory control unit 124 are connected to steering wheel position sensors 112A and 112B, to wheel angle sensors 116A and 116B, to solenoids 48 and 50, and to spool position sensors 56 and 58. The first supervisory control unit 124 is also connected to solenoid 25 of shut-off valve 22.

Second channel 120 includes the second main processing unit 126 and the second supervisory control unit 128. The second main processing unit 126 and the second supervisory control unit 128 are connected steering wheel position sensors 112C and 112D, to wheel angle sensors 116C and 116D, to solenoids 52 and 54, and to spool position sensors 60 and 62. The second supervisory control unit 128 is also connected to solenoid 29 of shut-off valve 24. A dedicated CAN bus 130 communicates non safety critical information, such as diagnostics and/or reprogramming, between the channels 118 and 120. Channels 118 and 120 are also connected to a conventional vehicle battery 119 and an alternator 121.

The main processor units 122 and 126 generate control signals (preferably pulse width modulated "PWM") for the solenoids of the directional control valve units 18 and 20 as a function of the sensed position of the steering wheel 114 and of the steered wheels (not shown). The supervisor processor units 124 and 128 control the shut-off valves 22 and 24 and operate to isolate the channels 118 and 120 from each other. The supervisor processor units 124 and 128 also monitor the health or condition of both channel by direct monitoring of the PWM outputs of the main processor units 122 and 126.

Lines 132 include the following connections between the controllers: supervisor 124 to main 122, main 122 to main 126, main 126 to main 122, supervisor 128 to main 122. These lines communicate pulse width modulated (PWM) signals between the main and supervisor processors, and when one of the processor detects a fault, that processor communicates the existence of that fault to the other processors by changing the duty cycle of the PWM signal communicated to the other processors. This information allows either channel to understand the health of the opposite channel, and to take the appropriate control action.

In normal conditions, the solenoids of valves 22 and 24 are both energized and valve unit 18 (valves 40 and 42) and valve unit 20 (valves 44 and 46) are all operated to share in the control of hydraulic flow to and from the actuator 12. However, if a fault occurs in valve unit 18 or in the circuitry associated with valve unit 18, then processor 124 will deactivate shut-off valve 22, and all the flow to actuator 12 will be flow through shut-off valve 24 and will be controlled by valve unit 20 (valves 44 and 46). Similarly, if a fault occurs in valve unit 20 or in the circuitry associated with valve unit 20, then processor 128 will deactivate shut-off valve 24, and all the flow to actuator 12 will be flow through shut-off valve 22 and will be controlled by valve unit 18 (valves 40 and 42).

Thus, the hydraulic circuit of this invention includes two nearly identical electric (redundant) channels to guarantee the system functions in the event of a single component failure. In each channel, the main processor is responsible for controlling the directional steering control valves, and the supervisor processor controls the shut-off valve of the associated channel.

Critical input sensor information is communicated by directly by a hardwired connection between the sensors and both channels.

In this system, all of the steering-related input sensor signals are communicated to both main and to both supervisor processors. Both the supervisor and main processors can calculate a steering valve control signal, but only main processors are connected to the steering control valves. However, the supervisor processors can monitor the steering control signals generated by the main processors, and can disable oil flow (isolate/shutoff) if a main processor generates an unrealistic or invalid control signal. The result is a system which has two redundant circuits which normally combine outputs, but can operate separately in the event of a failure in one of the circuits.

While the present invention has been described in conjunction with a specific embodiment, it is understood that many alternatives, modifications and variations will be apparent to those skilled in the art in light of the foregoing description. Accordingly, this invention is intended to embrace all such alternatives, modifications and variations which fall within the scope of the appended claims.

## Claims

1. Steering system, in particular a steer-by-wire steering system, the system comprising a hydraulic circuit (10) including a hydraulic pump (26), a reservoir (28), a bi-directional steering actuator (12) having left and right inlets (14, 16), first and second electronic control units (ECU) (122, 124, 126, 128) for generating electrical steering control signals in response to an operator-generated steering command, the hydraulic system (10) comprising: a first solenoid operated directional control valve unit (18); a first solenoid operated shut-off valve (22), the first directional control valve unit (18) and the first shut-off valve (22) being connected in series between the pump (26), the reservoir (28) and the steering actuator (12), and the first directional control valve unit (18) and the first shut-off valve (22) being connected to the first ECU (122, 124) and controlled thereby; a second solenoid operated directional control valve unit (20); and a second solenoid operated shut-off valve (24), the second directional control valve unit (20) and the second shut-off valve (24) being connected in series between the pump (26), the reservoir (28) and the steering actuator (12), and the second directional control valve unit (20) and the second shut-off valve (24) being connected to the second ECU (126, 128) and controlled thereby, **characterized in that** in the absence of a fault condition both shut-off valves (22, 24) are open so that hydraulic flow to and from the actuator (12) is shared by both the first and second directional control valve units (18, 20).

2. The system of claim 1 wherein in response to fault condition in the first directional control valve unit (18) or in a portion of the system associated with the first directional control valve unit (18), the first ECU (122, 124) closes the first shut-off valve (22) so that the actuator (12) is controlled only by the second directional control valve unit (20).

3. The system of claim 1, further comprising: a shuttle check valve (98, 100, 102) communicated with the directional control valve units (18, 20) and the actuator (12) for communicating to the pump (26) a pressure signal representing a highest pressure sensed therein.

4. The system of claim 1, further comprising: a pressure limiting relief valve unit (96) communicated with the inlets (14, 16) of the actuator (12).

5. The system of claim 1, further comprising: valve spool position sensors (56, 58, 60, 62), each operatively coupled to a respective one of the directional control valve units (18, 20), and each communicating a valve position signal to one of the ECUs (122, 124, 126, 128).

6. The system of claim 1, wherein the each directional control valve unit (18, 20) comprises: a first solenoid operated 4-way, 2-position valve (40, 44) controlling communication of pump pressure to the right actuator inlet (16); and a second solenoid operated 4-way, 2-position valve (42, 46) controlling communication of pump pressure to the left actuator inlet (14).

7. The system of claim 6, further comprising: a plurality of valve position sensors (56, 58, 60, 62) each operatively coupled to a respective one of the solenoid operated 4-way, 2-position valves (40, 42, 44, 46), and each communicating a valve position signal to one of the ECUs (122, 124, 126, 128).

8. The system of claim 6, wherein: each of the 4-way, 2-position valves (40 42, 44, 46) is spring biased to a position wherein communication is blocked between the pump (26) and the actuator (12) and communication is open between the reservoir (28) and the actuator (12).

9. The system of claim 1, wherein: each of the shut-off valves (22, 24) is spring biased to a position wherein communication to the pump (26) is blocked and communication to the reservoir (28) is open.

## Patentansprüche

1. Lenksystem, insbesondere Steer-by-wire-Lenksystem, wobei das System einen Hydraulikkreis (10) umfasst, der eine hydraulische Pumpe (26), einen Behälter (28), einen bidirektionalen Lenkaktor (12) mit einem linken und rechten Einlass (14, 16), eine erste und eine zweite elektronische Steuereinheit (ECU) (122, 124, 126, 128) zur Erzeugung elektrischer Lenksteuersignale als Reaktion auf einen vom Bediener erzeugten Lenkbefehl enthält, wobei das Hydrauliksystem (10) Folgendes umfasst: eine erste elektromagnetisch betätigte Wegeventileinheit (18); ein erstes elektromagnetisch betätigtes Sperrventil (22), wobei die erste Wegeventileinheit (18) und das erste Sperrventil (22) zwischen der Pumpe (26), dem Behälter (28) und dem Lenkaktor (12) in Reihe geschaltet sind und die erste Wegeventileinheit (18) und das erste Sperrventil (22) mit der ersten ECU (122, 124) verbunden sind und von ihr gesteuert werden; eine zweite elektromagnetisch betätigte Wegeventileinheit (20); und ein zweites elektromagnetisch betätigtes Sperrventil (24), wobei die zweite Wegeventileinheit (20) und das zweite Sperrventil (24) zwischen der Pumpe (26), dem Behälter (28) und dem Lenkaktor (12) in Reihe geschaltet sind und die zweite Wegeventileinheit (20) und das zweite Sperrventil (24) mit der zweiten ECU (126, 128) verbunden sind und von ihr gesteuert werden, **dadurch gekennzeichnet, dass** bei Fehlen eines Fehlerzustands beide Sperrventile (22, 24) geöffnet sind, so dass Hydraulikfluss zu und von dem Aktor (12) von sowohl der ersten als auch der zweiten Wegeventileinheit (18, 20) geteilt wird.

2. System nach Anspruch 1, wobei als Reaktion auf einen Fehlerzustand in der ersten Wegeventileinheit (18) oder in einem Teil des der ersten Wegeventileinheit (18) zugeordneten Systems die erste ECU (122, 124) das erste Sperrventil (22) schließt, so dass der Aktor (12) nur von der zweiten Wegeventileinheit (20) gesteuert wird.

3. System nach Anspruch 1, das weiterhin ein Wechselrückschlagventil (98, 100, 102) umfasst, das mit den Wegeventileinheiten (18, 20) und dem Aktor (12) in Verbindung steht, um der Pumpe (26) ein Drucksignal zuzuführen, das einen darin erfassten höchsten Druck darstellt.

4. System nach Anspruch 1, das weiterhin eine druckbegrenzende Entlastungsventileinheit (96) umfasst, die mit den Einlässen (14, 16) des Aktors (12) in Verbindung steht.

5. System nach Anspruch 1, das weiterhin Ventilschieberstellungssensoren (56, 58, 60, 62) umfasst, die jeweils mit einer jeweiligen der Wegeventileinheiten (18, 20) wirkgekoppelt sind und jeweils ein Ventilstellungssignal an eine der ECUs (122, 124, 126, 128) leiten.

6. System nach Anspruch 1, wobei die jeweilige Wegeventileinheit (18, 20) ein erstes elektromagnetisch betätigtes 4-Wege-2-Stellungs-Ventil (40, 44), das das Leiten von Pumpendruck zu dem rechten Aktoreinlass (16) steuert, und ein zweites elektromagnetisch betätigtes 4-Wege-2-Stellungs-Ventil (42, 46), das das Leiten von Pumpendruck zu dem linken Aktoreinlass (14) steuert, umfasst.

7. System nach Anspruch 6, das weiterhin mehrere Ventilstellungssensoren (56, 58, 60, 62) umfasst, die jeweils mit einem jeweiligen der elektromagnetisch betätigten 4-Wege-2-Stellungs-Ventile (40, 42, 44, 46) wirkgekoppelt sind und jeweils ein Ventilstellungssignal an eine der ECUs (122, 124, 126, 128) leiten.

8. System nach Anspruch 6, wobei jedes der 4-Wege-2-Stellungs-Ventile (40, 42, 44, 46) in eine Stellung federbelastet ist, in der eine Verbindung zwischen der Pumpe (26) und dem Aktor (12) gesperrt und eine Verbindung zwischen dem Behälter (28) und dem Aktor (12) geöffnet ist.

9. System nach Anspruch 1, wobei jedes der Sperrventile (22, 24) in eine Stellung federbelastet ist, in der eine Verbindung mit der Pumpe (26) gesperrt und eine Verbindung mit dem Behälter (28) geöffnet ist.

## Revendications

1. Système de direction, en particulier un système de direction avec conduite par fil, le système comprenant un circuit hydraulique (10) comportant une pompe hydraulique (26), un réservoir (28), un actionneur de direction bidirectionnel (12) ayant des entrées droite et gauche (14, 16), des première et deuxième unités de commande électroniques (ECU) (122, 124, 126, 128) pour générer des signaux de commande de direction électriques en réponse à une commande de direction générée par un opérateur, le système hydraulique (10) comprenant : une première unité de soupape de commande directionnelle actionnée par solénoïde (18) ; une première soupape d'arrêt actionnée par solénoïde (22), la première unité de soupape de commande directionnelle (18) et la première soupape d'arrêt (22) étant connectées en série entre la pompe (26), le réservoir (28) et l'actionneur de direction (12), et la première unité de soupape de commande directionnelle (18) et la première soupape d'arrêt (22) étant connectées à la première ECU (122, 124) et étant commandées par cette dernière ; une deuxième unité de soupape de commande directionnelle actionnée par solénoïde (20) ; et une deuxième soupape d'arrêt actionnée par solénoïde (24), la deuxième unité de soupape de commande directionnelle (20) et la deuxième soupape d'arrêt (24) étant connectées en série entre la pompe (26), le réservoir (28) et l'actionneur de direction (12), et la deuxième unité de soupape de commande directionnelle (20) et la deuxième soupape d'arrêt (24) étant connectées à la deuxième ECU (126, 128) et étant commandées par cette dernière, **caractérisé en ce qu'**en l'absence d'un état de panne, les deux soupapes d'arrêt (22, 24) sont ouvertes, de sorte que l'écoulement hydraulique vers et depuis l'actionneur (12) soit partagé à la fois par la première et la deuxième unité de soupape de commande directionnelle (18, 20).

2. Système selon la revendication 1, dans lequel, en réponse à un état de panne dans la première unité de soupape de commande directionnelle (18), ou dans une portion du système associée à la première unité de soupape de commande directionnelle (18), la première ECU (122, 124) ferme la première soupape d'arrêt (22) de sorte que l'actionneur (12) soit commandé uniquement par la deuxième unité de soupape de commande directionnelle (20).

3. Système selon la revendication 1, comprenant en outre : une soupape d'échange antiretour (98, 100, 102) en communication avec les unités de soupape de commande directionnelles (18, 20) et l'actionneur (12) pour communiquer à la pompe (26) un signal de pression représentant une pression maximale détectée dans celle-ci.

4. Système selon la revendication 1, comprenant en outre : une unité de soupape de détente de limitation de pression (96) communiquant avec les entrées (14, 16) de l'actionneur (12).

5. Système selon la revendication 1, comprenant en outre : des capteurs de position de tiroir de soupape (56, 58, 60, 62), chacun étant couplé fonctionnellement à l'une respective des unités de soupape de commande directionnelles (18, 20) et chacun communiquant un signal de position de soupape à l'une des ECU (122, 124, 126, 128).

6. Système selon la revendication 1, dans lequel chaque unité de soupape de commande directionnelle (18, 20) comprend : une première soupape actionnée par solénoïde à 4 voies et 2 positions (40, 44) commandant la communication de la pression de la pompe à l'entrée droite de l'actionneur (16) ; et une deuxième soupape actionnée par solénoïde à 4 voies et 2 positions (42, 46) commandant la communication de la pression de la pompe à l'entrée gauche de l'actionneur (14).

7. Système selon la revendication 6, comprenant en outre une pluralité de capteurs de position de soupape (56, 58, 60, 62), chacun étant accouplé fonctionnellement à l'une respective des soupapes actionnées par solénoïde à 4 voies et 2 positions (40, 42, 44, 46), et chacun communiquant un signal de position de soupape à l'une des ECU (122, 124, 126, 128).

8. Système selon la revendication 6, dans lequel chacune des soupapes à 4 voies et 2 positions (40, 42, 44, 46) est sollicitée par ressort dans une position dans laquelle la communication entre la pompe (26) et l'actionneur (12) est bloquée et la communication entre le réservoir (28) et l'actionneur (12) est ouverte.

9. Système selon la revendication 1, dans lequel chacune des soupapes d'arrêt (22, 24) est sollicitée par ressort dans une position dans laquelle la communication avec la pompe (26) est bloquée et la communication avec le réservoir (28) est ouverte.
